# EUROPEAN PATENT APPLICATION

(11) **EP 0 931 675 A1**
(43) Date of publication of application: **28.07.1999**
(21) Application number: 99300078.5
(22) Date of filing: 06.01.1999
(51) Int. Cl.: B60B 33/00

(54) **Support means for housings**

(30) Priority: 21.01.1998 GB 9801268
(71) Applicant: VERO ELECTRONICS LIMITED, Eastleigh Hants S05 3ZR (GB)
(72) Inventor: Horne, David, South Wonston, Hampshire SO53 3EB (GB)
(74) Representative: Purvis, William Michael Cameron

(57) **Abstract**

Support means for a housing comprises a body 1 having inserted in a vertical bore therein a mounting pin 2 whereby the body 1 can be mounted on the underside of a housing. On one side of the vertical axis of the pin 2 a portion 1a of the housing mounts a pair of wheels 3 so that the wheels are castered. On the other side of the vertical axis of the pin 2, a portion 1b of the housing 1 has a vertical bore therein which is screw threaded and has a vertical screw threaded pin 4 engaged therein, the pin having a foot 5 at its lower end. The pin 4 can be lowered to engage the foot with a floor.

## Description

The invention relates to support means for housings.

Housings, particularly racks or cabinets used to house electronic equipment, are usually assembled and fitted out at some place other than their eventual point of use. They are then transported and moved into position ready for wiring and final installation. Such housings, whether full of equipment or empty, are relatively heavy and cannot be easily man handled. To aid this movement wheels or casters may be fitted at the base of a housing allowing it to be easily wheeled into position.

When finally positioned for use it is important that the housing does not subsequently move. It may be retained in position by locking the rotation of the caster wheels but this is an unsatisfactory solution when installing the housing on an uneven floor.

To overcome his problem a set of height adjustable feet may also be fitted to the base of the housing alongside the casters. These may be screwed down to raise the housing together with its casters off the floor thus securely supporting the housing in a fixed and correctly aligned position.

This combination of separate casters and adjustable feet has disadvantages. The caster swings around its pivot point allowing, by its action, the free movement of the housing. As it swings it described an arc which is usually about twice the diameter of the caster wheel. An adjustable floor cannot be positioned within this arc or it will prevent the caster from operating freely and, as a result, the foot and the caster may be widely spaced to act independently.

This geometry presents a problem since, in order to give the housing greatest stability when being moved or when installed, the supporting positions on the base must be as close to the outer corners as possible. It is not possible to achieve these ideal positions for both the casters and the adjustable feet and in one of the two functional modes, during movement of when installed, the housing must be less stable than is desired.

Also, when designing the base structure of such a housing, it is necessary to include strong locations to mount casters and feet, ie locations which are reinforced to allow the weight of the housing to be carried without locally deforming the structure. When low manufacturing costs are paramount it is the practice in some housing designs to include only a single set of four strong mounting locations which allow either a caster or an adjustable foot to be used but not both in combination.

According to the invention support means for a housing comprises, at each of a plurality positions, a wheel and a foot provided together on a single mounting.

Thus the wheel can be rotatably mounted on a member which is to be mounted on the housing, either fixedly or rotatably, particularly about a vertical axis. Where the member is rotatably mounted, the wheel may be offset from the vertical axis to give a caster effect.

The member also mounts the foot which is adjustable with respect to the member, preferably by means of a screw thread in a vertical bore in the member, so that an undersurface of the foot can be moved to a height lower than the under surface of the wheel.

The invention is diagrammatically illustrated by way of example in the accompanying drawings, in which:-
Figure 1 is a perspective view of support means according to the invention;
Figure 2 is a side view corresponding to Figure 1; and
Figure 3 is a plan view corresponding to Figure 1.

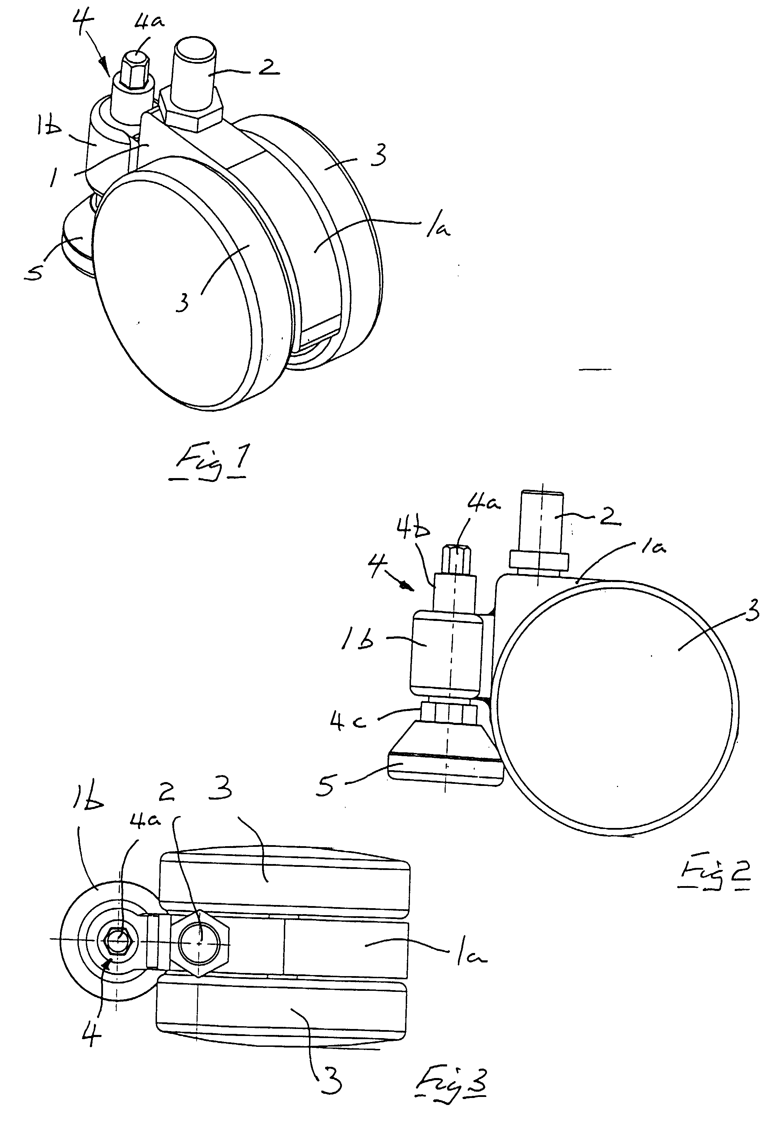

Referring to the drawings, support means for a housing comprises a body 1 having inserted in a vertical bore therein a mounting pin 2 whereby the body 1 can be mounted on the underside of a housing (not shown) by inserting the pin 2 in known manner into a vertical bore in the underside of the housing. On one side of the vertical axis 2a of the pin 2 a portion 1a of the housing has a horizontal bore therein, which is not visible in the drawing, but in which is inserted an axle having a wheel 3 on each end thereof. Thus since the horizontal axis of the wheel is offset from the vertical axis 2a of the pin 2 the wheels are castered with respect to the vertical axis 2a of the pin 2. On the other side of the vertical axis 2a of the pin 2, a portion 1b of the housing 1 has a vertical bore therein which is screw threaded and has a vertical screw threaded pin 4 engaged therein. The pin 4 has a hexagonal portion 4a at its upper end, a screw threaded portion 4b engaged in the portion 1b of the housing 1, a further, larger hexagonal portion 4c below the housing portion 1b and a foot 5 at its lower end. By means of the hexagonal portions 4a or 4c the pin 4 can be rotated to move the foot 5 from the raised position shown in Figure 2 to a lowered position in which the underside of the foot 5 is at a level lower than the underside of the wheel 3.

By combining the mountings of the wheels 3 and the foot 5 into the single member 1, 1a, 1b, the axis of the adjustable foot 5 can be located relatively close to the vertical axis 2a of the pin 2, that is to say much closer than a position located outside the swinging circle of the periphery of the wheel 3, whereby the wheel 3 and the foot 5 can be stably mounted and on a single mounting position of a housing.

## Claims

1. Support means for a housing comprising, at each of a plurality positions, a wheel (3) and a foot (5) provided together on a single mounting.

2. Support means according to claim 1, wherein the wheel (3) is rotatably mounted on a member (1) which is to be mounted on the housing.

3. Support means according to claim 2, wherein the member (1) is fixedly mounted on the housing.

4. Support means according to claim 2, wherein the member (1) is rotatably mounted on the housing about a vertical axis.

5. Support means according to claim 4, wherein the wheel (3) is offset from the vertical axis to give a caster effect.

6. Support means according to any one of claims 2 to 5, wherein the member (1) also mounts the foot (5) which is adjustable with respect to the member (1).

7. Support means according to claim 6, wherein the foot (5) is adjustable by means of a screw thread (4b) in a vertical bore in the member (1), so that an undersurface of the foot (5) can be moved to a height lower than the undersurface of the wheel (3).
